# EUROPEAN PATENT APPLICATION

(11) **EP 4 394 296 A1**
(43) Date of publication of application: **03.07.2024**
(21) Application number: 22217323.9
(22) Date of filing: 30.12.2022
(51) Int. Cl.: F27B 1/00, C04B 2/08, C04B 2/10, C04B 2/12, F27B 1/02, F27B 1/04, F27B 1/08, F27B 1/22, F27D 17/00, F27D 99/00

(54) **METHOD FOR CALCINING CARBONATED MINERAL STONES IN A PARALLEL FLOW REGENERATIVE KILN AND IMPLEMENTED KILN**

(71) Applicant: S.A. LHOIST RECHERCHE ET DEVELOPPEMENT, 1342 Ottignies-Louvain-la-Neuve (BE)
(72) Inventor: VAN CANTFORT, Olivier, 1150 Woluwe-Saint-Pierre (BE); CLOAREC, Tristan, 64490 Urdos (FR)
(74) Representative: Calysta NV

(57) **Abstract**

Parallel flow regenerative kiln, comprising at least two shafts (1,2) interconnected by a crossover channel (4), each shaft comprising means for injecting a heated gas (6) inside the shaft (1) in calcination working at the top of the calcination zone (B), the kiln further comprising an external recirculation circuit (21) which comprises a separation body (20) for taking off a fraction of gaseous effluent from a removal duct (17), an external electrical furnace (23) connected with said separation body (20) and equipped with at least one plasma torch (24) for heating a gaseous flow and with a mixing chamber (25) wherein said heated gaseous flow is mixed with a control gas, which has not been heated by said electrical furnace (23), while so forming a first mixture to inject under the form of a heated gas, and said means for injecting a heated gas (6, 7) inside the shaft (1) in calcination working, which are connected to the mixing chamber (25) and inject said first mixture to inject at a temperature equal or higher than the temperature of calcination of the loaded mineral stones.

## Description

The present invention relates to a method for calcining carbonated mineral stones in a parallel flow regenerative kiln (PFRK). Such a kiln comprises at least two shafts interconnected by means of a crossover channel. In each shaft the stones are introduced in a top portion and follow a downward gravity displacement during which the stones are successively preheated, calcined and thereafter cooled in order to be collected in a low portion of each shaft.

A Parallel Flow Regenerative Kiln has usually 2 to 3 shafts, circular or rectangular, which do not work in a continuous way. In standard operation, in every period, usually of 12 to 20 minutes, a fuel is injected inside a calcining zone of one shaft by means of lances and is burned in presence of combustion air. Thereafter the descending calcined product is cooled in a cooling zone by heat exchange with a cooling air introduced at the bottom of the shaft. The flue gas consists in the combustion gas, the gas of decarbonation and the heated cooling air. This flue gas is drawn into another shaft through the crossover channel and thereafter through the stones present in this shaft and thereafter outward the kiln. So, in this shaft the present stones are preheated by the exiting flue gas. Consequently, during this period the shaft wherein the combustion takes place works according to a calcining way and the shaft wherein the flue gas is drawn through the stones works according to a preheating way. Thereafter, there is a period, usually between 30 seconds and 2 minutes, called inversion period, which is provided for reverting the air and fuel circuits. And the shaft having worked in a calcining way works now in a preheating way and the shaft having worked in a preheating way works now in a calcining way.

The classical method for calcining carbonated mineral stones in a parallel flow regenerative kiln having at least two shafts interconnected by a crossover channel, comprises, in standard operation,
- loading carbonated mineral stones at the top of each shaft,
- preheating these loaded stones in a preheating zone,
- calcining these preheated stones in a calcination zone with production of a decarbonated calcined material,
- cooling the calcined material with cooling air in a cooling zone,
- discharging the calcined material from the bottom of the shafts,
- exhausting a gaseous effluent from the kiln,
- each shaft alternately working in a calcining way and in a preheating way, one shaft working in a calcination way during a predetermined time period during which at least another shaft works in a preheating way, and inversely,
- the calcining way comprising :
   said loading step of carbonated mineral stones at the top of a kiln shaft,
   said calcining step by means of an increase of temperature inside said carbonated mineral stones having been preheated, with production of said decarbonated calcined material and
   release of a gaseous stream which flows in co-current with the calcined material, and
   through said crossover channel, a passage of said gaseous stream toward the at least one shaft working in a preheating way,
- said preheating way comprising :
   said preheating step of the loaded carbonated mineral stones by heat exchange with said gaseous stream coming from the crossover channel, which is ascending and flows in counter-current through the loaded carbonated mineral stones, and
   said exhausting step of said gaseous stream as gaseous effluent at the top of said at least one shaft in preheating way,
   said cooling step comprising a supply of cooling air at the bottom of each of said shafts or only of the shaft working in the calcining way.

In the calcining zone of a classical kiln, it is required in calcining way to inject and burn a fuel into the mass of the stones to be calcined under the preheated zone in order to benefit from the heat of the flue gas that was transferred to the stone in the preheating zone. In preheating way, the stones introduced into the kiln are at ambient temperature and the flue gas drawn outside the kiln is at about 150°C, limiting the energy losses.

According to the invention, standard operation means that the kiln produces the calcined material in a continuous manner. This operation does not concern the phases of starting, stopping or maintenance of the kiln.

According to the invention, carbonated mineral stones particularly mean calcareous stones (limestones), dolomitic stones (dolostones or unburnt dolomites) and/or magnesite stones which are calcined in quicklime, quick dolime and/or magnesia.

The calcination reaction of limestone into quicklime is :

CaCO₃ (solid) + heat ←→ CaO (solid)+ CO₂ (gas)

This reaction is endothermic and reversible. Below 850-900°C, lime and CO₂ can easily recombine. But from a temperature of the order of 900°C the starting stones give off a significative volume of CO₂ during their decarbonation. In order to obtain such a decarbonation, the temperature must consequently be significatively increased in the calcining zone. Today, this increase is mainly obtained by combustion of a fuel, frequently fossil, in presence of an oxidizer such as air. In turn, this fuel combustion contributes also to an important release of CO₂. Globally the current calcination methods actively participate in increasing the greenhouse effect.

During the fuel combustion a direct contact of the flame with the preheated carbonated mineral stones also results in possible local overheat in the calcination zone and the possibility that the flue gas or fuel ashes would contaminate the calcined material. A prior careful selection of the fuel is required to maintain a high quality of the calcined material, notably while avoiding high sulphur fuels. Even with selected fossil fuels, the calcined material reactivity can be affected by the fuel ash and the minor pollutants. During the combustion at high temperatures thermal NOx are also generated due to nitrogen possibly in the fuel and to high contents of nitrogen in the combustion air.

This very common calcination process has also the disadvantage of proposing a combustion of fuel with air and a cooling of the calcined product with air. This results in the release at the top of the kiln of a gaseous effluent having a high level of diatomic nitrogen N₂, and a comparatively low level of CO₂ (concentration by volume of the order of 20% to 27% on dry gas). Due to this high presence of nitrogen in the air, a capture of CO₂ is very difficult and expensive.

The object of the present invention is to remedy at least partially the problem of significant CO₂ emissions of PFRK kilns, without substantially modifying their cyclic functioning and by making little or no changes to their structure. Another object is to avoid as much as possible overheating of the calcined material and introduction of impurities in this material and in the gaseous effluent exiting from the kiln. The main object of the calcination kilns must obviously be maintained, i.e. the production of a calcined material of high quality and purity.

In order to solve these problems, according to the invention a method as above indicated further comprises
recirculating a fraction of the gaseous effluent exhausted from the top of said at least one shaft in preheating way,
outside the kiln, heating a gaseous flow by means of at least one plasma torch,
mixing said heated gaseous flow with a control gas which has not been heated by said at least one plasma torch, for controlling the temperature of a first gaseous mixture to inject, said gaseous flow to heat and /or said control gas being a part of the recirculated fraction of gaseous effluent, and
injecting said first gaseous mixture into the shaft working in calcining way at a level which is located at the top of the calcination zone, in order to obtain said increase of temperature allowing a calcining of the carbonated mineral stones and higher of its recarbonation temperature.

The invention relies mostly on externalizing the energy supply while heating a gaseous flow with a plasma torch, which is a fully electrical solution. The CO₂ and other molecules in the heated gas will be partially broken down at high temperature in an electric arc, but mostly recombined in the process.

No fuel and no air are still necessary for a combustion inside the kiln. Consequently, no or limited additional pollutant will be emitted apart from the minor ones contained in the stones. No ash will be produced resulting to a pure decarbonated material. Due to the absence or the low level of nitrogen in the gas flows, no or very little NOx will be produced enabling the plants to comply with stricter regulations. Overheating the stones by a direct contact with a flame is not to fear. The appropriate temperature of the heated gas from the plasma torch is controlled very easily by means of the step of mixing, leading to a high quality of lime. According to the invention the heated recirculated gas is introduced inside the shaft in calcination way at the top of the calcining zone, just below the preheating zone, keeping so all the regenerative features of the kiln.

According to an embodiment of the process of the invention, said gaseous flow to heat by at least one plasma torch or the control gas or both of them is a part of the recirculated fraction of the gaseous effluent.. However, it is also possible to conceive that said gaseous flow to heat by at least one plasma torch or the control gas is comprised of air, steam, CO₂, N₂, noble gas and their mixtures, particularly issuing from a source which is provided outside the kiln.

By recirculating a CO₂ based gas and in absence of combustion air, the system will enrich in CO₂ the gaseous effluent exiting from the kiln, making it easier to capture CO₂. By effluent concentrated in CO₂ is to be understood according to the invention a CO₂ content of at least 35 vol%, advantageously of at least 45 vol%, preferably of at least 60 vol%, notably of at least 80 vol% and particularly advantageously of at least 90 vol% on dry gas. Such a CO₂ may be useable or sequestered in favorable conditions and so reduces the contribution to the greenhouse effect of the kiln.

According to an embodiment of the invention, said cooling step comprises a supply of cooling air at the bottom of each of said shafts or only of the shaft working in the calcining way, the method further comprising an extraction of the heated cooling air from the shafts at a level located below the crossover channel. Preferably, said gaseous effluent exiting from the kiln being CO₂ concentrated.

In this case, the gaseous effluent removed from the kiln is formed almost exclusively of the gaseous stream resulting from the decarbonation and of the CO₂ based gas injected in the shaft in calcination way and in the crossover channel. Therefrom it results that the gaseous effluent exhausted from the furnace has a concentrated CO₂ content, typically of at least 80% by volume on dry gas, preferably of at least 90% by volume on dry gas, most preferably at least 95%.

According to a preferential embodiment of the invention, a part of the recirculated fraction of gaseous effluent which has not been heated is injected at the top of each shaft in calcining way.

According to an advantageous embodiment of the invention, the method comprises an adjustment of the temperature of a portion of the first gaseous mixture to inject by mixing said portion with a part of said recirculated fraction of gaseous effluent which has not been heated by said at least one plasma torch and an injection of this mixture into the crossover channel.

Advantageously the method comprises at least one heat exchange between the extracted heated cooling air and said recirculated fraction of the gaseous effluent.

In a particular case, the method takes place in a 2-shafts kiln.

The present invention also concerns a parallel flow regenerative kiln.

Such a kiln comprises at least two shafts interconnected by a crossover channel,
each shaft comprising, in position in service or out of service,
   - at least one entrance opening for loading carbonated mineral stones, at the top of the shaft,
   - at least one exit opening for discharging a decarbonated calcined material, at the bottom of the shaft,
   - a removal duct for exhausting a gaseous effluent from the top of the shaft, and
   - a cooling air supply at the bottom of the shaft for cooling the decarbonated calcined material to be discharged,

the kiln further comprising a reversing system which is arranged to drive said positions in service and out of service of each shaft alternately in calcination working and in preheating working, a shaft being in calcination working during a predetermined time period while at least another shaft is in preheating working and inversely according to the control of said reversing system,
the shaft in calcining working comprising from the top to the bottom successively a preheating zone, a calcination zone and a cooling zone, and said interconnecting crossover channel being located at the bottom of the calcination zone.

According to the invention each shaft of the kiln further comprises means for injecting a heated gas inside the shaft in calcination working at the top of the calcination zone,
the kiln further comprising an external recirculation circuit which comprises
- a separation body for taking off a fraction of said gaseous effluent from said removal duct,
- an external electrical furnace connected with said separation body and equipped with at least one plasma torch for heating a gaseous flow and with a mixing chamber wherein said heated gaseous flow is mixed with a first part of the taken off fraction of gaseous effluent, which has not been heated, while so forming a first mixture to inject under the form of a heated gas, said furnace being so arranged that said gaseous flow to heat and /or said control gas is a part of the recirculated fraction of gaseous effluent, and
- said means for injecting a gas inside the shaft in calcination working which are connected to the mixing chamber and inject said first mixture to inject at a temperature equal or higher than the temperature of calcination of the loaded mineral stones.

As explained above, the PFRK kiln has a cyclic operation, each shaft operating for a predetermined period of time in calcining way, then, after an inversion time of usually 30 seconds to 2 minutes, in preheating way, and so on. During the inversion time the inversion system synchronously controls all the changes necessary to pass from one way to another, for example by opening means for injecting a gas inside the shaft working in calcination way and closing them when the shaft is switched to the preheating way. The inversion system therefor not only controls numerous flaps and valves, but also the operation of loading and unloading equipment or even that of various suction, pumping or injection elements.

As can be seen, the kiln according to the invention has only a few structural modifications made to the exterior. Existing kilns can therefore easily be fitted out to implement a calcination process according to the invention.

According to an embodiment of the kiln of the invention, the at least one plasma torch is supplied, as gaseous flow to heat, with said taken off fraction of gaseous effluent by means of said external recirculation circuit. According to another embodiment, the at least one plasma torch is connected to a source of air, steam, CO₂, N₂, noble gas or their mixtures, as gaseous flow to heat. According to a particular embodiment of the invention, the mixing chamber (25) is connected with a source (36) of air, steam, CO₂, N₂, noble gas or their mixtures, as gaseous flow to heat.

Preferably, each shaft comprises a top opening for introducing a part of said taken off fraction of gaseous effluent.

Advantageously, at the bottom of each shaft, at a level lower than the crossover channel, said means for removing heated cooling air from the kiln may comprise a central collector element, which communicates with an external extracting device.

Advantageously, the kiln according to the invention comprises an additional mixing chamber which is connected to said mixing chamber of the external furnace and means for injecting gas from this additional mixing chamber into the crossover channel, a portion of said mixture to inject from said mixing chamber of the external furnace being mixed in this additional mixing chamber with a part of said taken off fraction of gaseous effluent which has not been heated.

Particularly each shaft comprises an external shell and said means for injecting a gas inside the shaft comprise at the top of the calcination zone lateral holes in said shell and/or a central perforated cylinder and/or lateral beams, connected to the mixing chamber.

Preferentially, at the bottom of each shaft, a central collector element is provided which communicates with an external extracting device for removing from the kiln, at a level lower than the crossover channel, the cooling air which has been heated in contact with the decarbonated calcined material.

According to some embodiments of the kiln, each shaft has a circular section and is provided with a peripheral channel at the bottom of the calcination zone, said crossover channel interconnecting the peripheral channels of the shafts in order to allow a passage of gas from one shaft to another one. At a level lower than the peripheral channels and the crossover channel, said means for removing heated cooling air from the kiln may comprise an annular collector which communicates with an external extracting device.

According to other kilns, each shaft has a rectangular section, a side of one shaft facing a side of another shaft, the crossover channel interconnecting directly the shafts between said facing sides. At a level below the crossover channel, said means for removing heated cooling air from the kiln comprise on at least some sides of each shaft at least one collector which communicates with an external extracting device.

Advantageously, at least one heat exchanger supplied with heated cooling air extracted from the kiln is arranged on said external recirculation circuit.

In a particular case, the kiln is a 2-shafts kiln.

Other features and details of the method and kiln according to the invention are indicated in the appended claims. Other particularities of the invention will also result from the non-limiting description given below, with reference to the drawings.

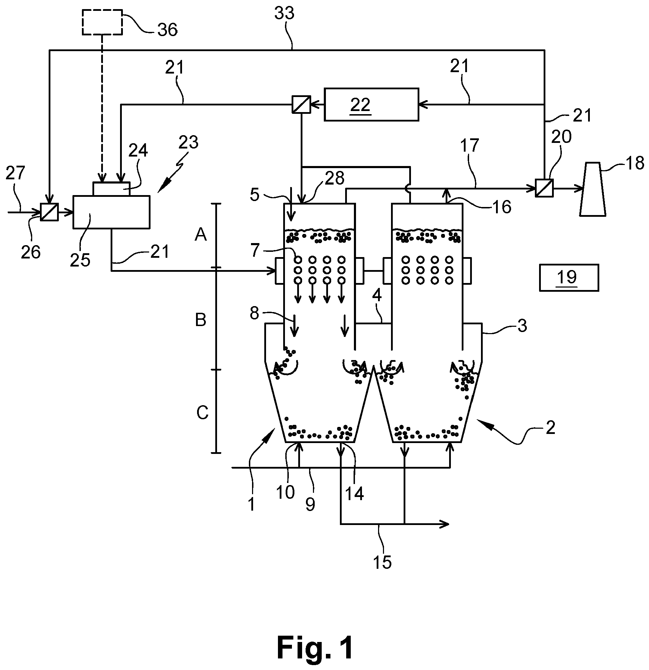

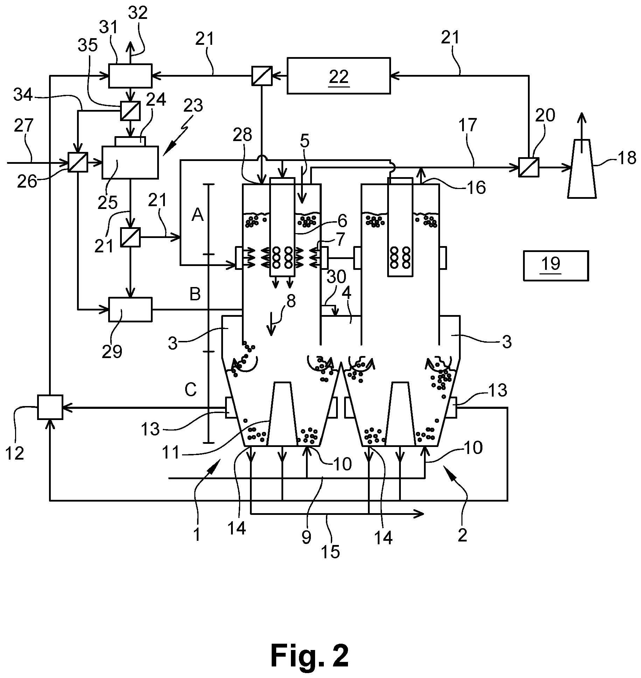

Figures 1 and 2 represent two embodiments of a kiln according to the invention. In the figures, identical or similar elements have the same references. Conventionally the shaft 1 shown on the left works in calcining way and the shaft 2 shown on the right in preheating way.

As can be seen in Figure 1, the illustrated PFRK kiln comprises two shafts which have a circular section and are provided with peripheral channels 3 which are interconnected by a crossover channel 4. The shafts are divided in height into three zones, the preheating zone A where the carbonated stones are preheated before calcination, the calcination zone B wherein the decarbonation of the carbonated preheated stones takes place and the cooling zone C wherein the cooling of the decarbonated calcined material takes place.

The carbonated stones are introduced at the top of the shafts by means of an entrance opening 5 which is in open position. By gravity the stones gradually descend in the shaft. When the shaft works in calcining way, at the top of the calcining zone B, thus just under the preheating zone A, means for injecting a gas having a temperature equal or higher than the calcination temperature of the stones are provided in service. On the kiln illustrated on Fig. 1, these means consist in holes 7 in an external shell of the shaft which allow injection of a gas from the outside of the shaft, several horizontal layers of injection points being advantageously required to get the right heat distribution. So, a decarbonation of the stones takes place with obtention of a decarbonated calcined material which continues to descend in the shaft and of a gaseous stream 8 which flows in co-current with the calcined material.

Via a supply pipe 9 and a feeding opening 10 which is in open position, cooling air is introduced at the bottom of the shaft. Said cooling air flows in counter-current to the calcined material, for cooling it. The cooled calcined material is discharged into an unloading equipment 15 through the exit opening 14 which is in open position.

Said gaseous stream consists in the CO₂ released during the decarbonation, the heated gas injected inside the shaft and the heated cooling air. Via the peripheral channel 3, this gaseous stream passes through the crossover channel 4 and thereafter inside the shaft 2 working in preheated way.

When a shaft is working in preheated way, here the shaft 2, the means for injecting a gas 7 are out of service. The same applies to the entrance opening 5 for the carbonated stones. On the other hand, the feeding opening 10 for the cooling air and the outlet 14 for the calcined material remain in the open position. In this shaft 2 the gas stream which comes from the crossover channel 4 progresses to the top of the shaft in counter-current of the stones which are so preheated. Via an outlet opening 16 which is here in open position, gaseous effluents are exhausted from the kiln through a removal duct 17 and a stack 18. In the shaft 1 working in calcination way, the outlet opening 16 of this removal duct 17 is closed.

The kiln also includes a reversing system 19 shown schematically. This system synchronously controls the operation of the shafts, during the inversion time, directly or remotely. The system is arranged to drive said positions in service and out of service of each shaft alternately in calcination working and in preheating working.

Outside of the kiln, on the removal duct 17, a separation body 20 has been provided, which is able of taking off a fraction of the gaseous effluent exhausted from the kiln and of introducing it into a recirculation circuit 21. In this circuit the fraction of gaseous effluent is advantageously treated in a treatment unit 22, wherein it can for example be filtered and/or dried. The recirculation circuit 21 comprises also an external electrical furnace 23 which is equipped with at least one plasma torch 24 for heating a part to heat of said taken off fraction of effluent gaseous and with a mixing chamber 25 wherein said heated part of said taken off fraction of gaseous effluent is mixed with a part of said fraction of gaseous effluent which has not been heated. In the present kiln said part of said fraction of effluent gaseous which is not to heat is taken off from the recirculated circuit 21 before the treatment unit 22 by the connecting duct 33, and has thus a lower temperature. A control body 26 driven by the reversing system 19 supplies the mixing chamber with the quantity of said cold part of taken off gaseous effluent which is necessary to obtain, in mixture with the heated part, a gas having the temperature appropriate for being injected through the holes 7 of the shaft working in calcination way and for obtaining a thermal decomposition of the preheated stones.

As variant, it is possible to supply to the plasma torch 24 a gas issued from an external source 36 partially or totally in place of a recirculated fraction of gaseous effluent.

Air at ambient temperature may also be introduced optionally in the mixing chamber 25 from an external source 27 if the temperature is accidentally too high in this chamber.

A part of said fraction of gaseous effluent may be taken off from the recirculated circuit 21 upstream of the electrical furnace 23. This taken off gas has a temperature close to the ambient temperature and is introduced in the shaft in calcining way at its top opening 28. This opening is closed in the shaft working in preheating way. A cold gas needs to be injected at the top of the kiln to keep the benefit from the regeneration, with a slightly higher pressure.

Figure 2 illustrates another embodiment of a PFRK kiln according to the invention.

In this kiln the means for injecting a gas coming from the mixing chamber 25, i.e. a gas at a temperature of the order of 950-1400°C, consist not only in holes 7 in the external shell of the shaft but also in a suspended perforated central cylinder 6, in order to distribute heat both from the middle of the shaft and from the periphery thereof.

In the kiln illustrated on Fig.2 the heated cooling air is drawn through a central collector element 11 which communicates with an external extracting device 12 for removing from the kiln, at a level lower than the crossover channel 4, the cooling air which has been heated in contact with the decarbonated calcined material. For the same purpose each circular shaft may also be equipped with an annular collector 13 which communicates also with said extracting device 12.

At least one heat exchanger supplied with heated cooling air extracted from the kiln is advantageously arranged on said external recirculation circuit 21. In the kiln of Fig.2 the heated cooling air drawn by the extracting device 12 is supplied to a heat exchanger 31 wherein a heat exchange takes place with the cold gas exiting from the treatment unit 22. This unit may contain gas treatment steps like for example cooling, dedusting, pollutants removal and/or water condensation. Air at a temperature close to the ambient temperature is so released in the atmosphere by the outlet 32 and there is an energy recovering upstream of the heating device 23. Between the heat exchanger 31 and the electrical furnace 23, a part of the fraction of the gaseous effluent is taken off from the recirculation circuit 21 by a separation element 35 and may be introduced in the mixing chamber 25 by means of the connecting duct 34 and the control body 26.

The kiln illustrated on Fig.2 comprises also an additional mixing chamber 29 which is connected to said mixing chamber 25 of the external furnace 23 and means for injecting a gas 30 from this additional mixing chamber into the crossover channel 4. In this additional mixing chamber 29 a portion of the gaseous mixture from said mixing chamber 25 is mixed with a part of said taken off fraction of gaseous effluent which has not been heated. This part is taken off from the recirculation circuit 21 upstream to the electrical furnace 23 and downstream of the heat exchanger 31.

In this kiln of Fig.2 the gaseous stream entering the shaft 2 consists almost only in the CO₂ released during the decarbonation in shaft 1, the heated gas injected inside the shaft 1 by the means 6 and 7 and the heated gas injected inside the crossover channel by the means 30. This gaseous stream is no more diluted by air, except for little amount of false air or cooling air that would not have been extracted. Effectively there is no more need of air for any combustion and the cooling air is extracted from the kiln. Consequently, the CO₂ content of the gaseous effluent exiting from the kiln is highly concentrated.

### Example

The kiln of this example corresponds to the kiln illustrated on Fig. 2 and is conceived for the production of 150 to 760 tons of lime per day. All the mentioned gaseous flows are expressed in Nm³/t of produced lime, on dry gas.

At the top of the shaft 1 working in calcining way, 270 to 1400 tpd(tons per day) of calcareous stones may be loaded through the entrance opening 5. Simultaneously 300 to 500 Nm³/t of recycled gas are introduced by the top opening 28 at a temperature of 30-50°C in order to benefit from the regeneration and not to obtain too high temperature at the outlet of the kiln.

The means for injecting gas 6 and 7 introduce a hot gas at the top of the calcination zone B in order to obtain a temperature of 1050-1250°C at the beginning of the calcination. This temperature corresponds to the temperature of the mixture of the cold gas recycled at the top of the shaft and of the hot gas injected at the top of the calcination zone. This obtained temperature is then widely higher than 900°C, and therefrom it results a decarbonation of the stones with a release of 360-390 Nm³/t of CO₂ and in the calcination zone there is formation of a gaseous stream of 950-1400 Nm³/t which flows in co-current with the calcined material.

250 to 300 Nm³/t of cooling air are introduced at the bottom of each shaft by a feeding opening 10. After heat exchange with the calcined material, the heated cooling air is extracted from the kiln by the collector elements 11 and 13. In order to compensate this extraction, 0 to 600 Nm³/t of a CO₂ based gas having a temperature of 910-1000°C are continuously introduced in the crossover channel 4 by the injection means 30. This introduction allows to avoid cooling down the kiln.

After passage through the crossover channel 4 the gaseous stream is drawn toward the outlet opening 16 of the shaft 2 while preheating the stones stored therein. 2000-2100 Nm³/t of gaseous effluent exit from the kiln at a temperature of 150-200°C.

A fraction of 1500 to 1800 Nm³/t of the gaseous effluent is taken off from the removal duct 17 by the separation body 20 and follows now the recirculation circuit 21 while 300 to 500 Nm³/t thereof are exhausted by the stack 18. This taken off gaseous fraction has a temperature of 120 to 140°C before entering the treatment unit 22 and 30 to 50°C after the treatment.

The separation element 35 separates in two parts the taken off gaseous fraction. The first part is transferred to a plasma torch which heats the gaseous flow at a very high temperature of 3000-5000°C. This heated part is mixed in a controlled manner with the second cold part of the fraction of gaseous effluent in order to obtain in the mixing chamber 25 a regulated temperature of 1300 to 1500°C.

In the example of kiln illustrated on Fig.2 a part of 900 to 1200 Nm³/t of this hot gaseous mixture is injected in the shaft 1 by means of the injection means 6 and 7 as above disclosed while another part of 0 to 600 Nm³/t is transferred to a second mixing chamber 29. There the gaseous flow is mixed in a controlled manner with a cold third part of the fraction of gaseous effluent in order to obtain an adjusted temperature of 910 to 1000°C. 0 to 600 Nm³/t of this mixture are injected in the crossover channel 4 as above disclosed.

The fraction of 300 to 500 Nm³/t of the gaseous effluent which are exhausted by the stack 18 have a CO₂ content of more than 95 vol%, preferably of 98 vol% on dry gas.

Obviously, the present invention is not limited to the disclosed embodiments and several modifications may be provided without being outside the scope of the appended claims.

## Claims

1. Method for calcining carbonated mineral stones in a parallel flow regenerative kiln having at least two shafts interconnected by a crossover channel, comprising, in standard operation,
- loading carbonated mineral stones at the top of each shaft,
- preheating these loaded stones in a preheating zone,
- calcining these preheated stones in a calcination zone with production of a decarbonated calcined material,
- cooling the calcined material with cooling air in a cooling zone,
- discharging the calcined material from the bottom of the shafts,
- exhausting a gaseous effluent from the kiln,
- each shaft alternately working in a calcining way and in a preheating way, one shaft working in a calcination way during a predetermined time period during which at least another shaft works in a preheating way, and inversely,
- the calcining way comprising :
said loading step of carbonated mineral stones at the top of a kiln shaft,
said calcining step by means of an increase of temperature inside said carbonated mineral stones having been preheated, with production of said decarbonated calcined material and
release of a gaseous stream which flows in co-current with the calcined material, and
through said crossover channel, a passage of said gaseous stream toward the at least one shaft working in a preheating way,
- said preheating way comprising :
said preheating step of the loaded carbonated mineral stones by heat exchange with said gaseous stream coming from the crossover channel, which is ascending and flows in counter-current through the loaded carbonated mineral stones, and
said exhausting step of said gaseous stream as gaseous effluent at the top of said at least one shaft in preheating way,
said cooling step comprising a supply of cooling air at the bottom of each of said shafts or only of the shaft working in the calcining way,
**characterized in that** said method further comprises
recirculating a fraction of the gaseous effluent exhausted from the top of said at least one shaft in preheating way,
outside the kiln, heating a gaseous flow by means of at least one plasma torch,
mixing said heated gaseous flow with a control gas which has not been heated by said at least one plasma torch, for controlling the temperature of a first gaseous mixture to inject, said gaseous flow to heat and /or said control gas being a part of the recirculated fraction of gaseous effluent, and
injecting said gaseous mixture into the shaft working in calcining way at a level which is located at the top of the calcination zone, in order to obtain said increase of temperature allowing a calcining of the carbonated mineral stones and higher of its recarbonation temperature.

2. Method according to claim 1, wherein said gaseous flow to heat by at least one plasma torch or said control gas is comprised of air, steam, CO₂, N₂, noble gas and their mixtures.

3. Method according to claim 1 or 2, **characterized in that** said cooling step comprises a supply of cooling air at the bottom of each of said shafts or only of the shaft working in the calcining way and **in that** the method further comprises an extraction of the heated cooling air from the shafts at a level located below the crossover channel.

4. Method according to anyone of claims 1 to 3, **characterized in that** a part of the recirculated fraction of gaseous effluent which has not been heated by said at least one plasma torch is injected at the top of each shaft in calcining way.

5. Method according to anyone of claims 1 to 4, further comprising an adjustment of the temperature of a portion of the gaseous mixture to inject by mixing said portion with a part of said recirculated fraction of gaseous effluent which has not been heated by said at least one plasma torch and an injection of this portion of gaseous mixture into the crossover channel.

6. Method according to any one of claims 3 to 5, comprising at least one heat exchange between the extracted heated cooling air and said recirculated fraction of the gaseous effluent.

7. Parallel flow regenerative kiln, comprising at least two shafts (1,2) interconnected by a crossover channel (4),
each shaft comprising, in position in service or out of service,
- at least one entrance opening (5) for loading carbonated mineral stones, at the top of the shaft,
- at least one exit opening (14) for discharging a decarbonated calcined material, at the bottom of the shaft,
- a removal duct (17) for exhausting a gaseous effluent from the top of the shaft, and
- a cooling air supply (9) at the bottom of the shaft for cooling the decarbonated calcined material to be discharged,
the kiln further comprising a reversing system (19) which is arranged to drive said positions in service and out of service of each shaft alternately in calcination working and in preheating working, a shaft (1) being in calcination working during a predetermined time period while at least another shaft (2) is in preheating working and inversely according to the control of said reversing system (19),
the shaft (1) in calcining working comprising from the top to the bottom successively a preheating zone (A), a calcination zone (B) and a cooling zone (C), and said interconnecting crossover channel (4) being located at the bottom of the calcination zone (B),
**characterized in that** each shaft comprises means for injecting a heated gas (6, 7) inside the shaft (1) in calcination working at the top of the calcination zone (B) and **in that** the kiln further comprises an external recirculation circuit (21) which comprises
- a separation body (20) for taking off a fraction of said gaseous effluent from said removal duct (17),
- an external electrical furnace (23) connected with said separation body (20) and equipped with at least one plasma torch (24) for heating a gaseous flow and with a mixing chamber (25) wherein said heated gaseous flow is mixed with a control gas, which has not been heated by said electrical furnace (23), while so forming a first mixture to inject under the form of a heated gas, said furnace being so arranged that said gaseous flow to heat and /or said control gas is a part of the recirculated fraction of gaseous effluent, and
- said means for injecting a heated gas (6, 7) inside the shaft (1) in calcination working, which are connected to the mixing chamber (25) and inject said first mixture to inject at a temperature equal or higher than the temperature of calcination of the loaded mineral stones.

8. Parallel flow regenerative kiln according to claim 7, wherein the at least one plasma torch (24) is supplied, as gaseous flow to heat, with said taken off fraction of gaseous effluent by means of said external recirculation circuit (21).

9. Parallel flow regenerative kiln according to claim 7, wherein the at least one plasma torch (24) is connected with a source (36) of air, steam, CO₂, N₂, noble gas or their mixtures, as gaseous flow to heat.

10. Parallel flow regenerative kiln according to claim 7 or 8, wherein the mixing chamber (25) is connected with a source (36) of air, steam, CO₂, N₂, noble gasor their mixtures, as gaseous flow to heat.

11. Parallel flow regenerative kiln according to anyone of claims 7 to 10, wherein each shaft comprises a top opening (28) for introducing a part of said taken off fraction of gaseous effluent.

12. Parallel flow regenerative kiln according to anyone of claims 8 to 11, further comprising an additional mixing chamber (29) which is connected to said mixing chamber (25) of the external furnace (23) and means for injecting gas (30) from this additional mixing chamber (29) into the crossover channel (4), a portion of said first mixture to inject from said mixing chamber (25) of the external furnace (23) being mixed in this additional mixing chamber (29) with a part of said taken off fraction of gaseous effluent which has not been heated by said external furnace (23).

13. Parallel flow regenerative kiln according to anyone of claims 8 to 12, **characterized in that** each shaft comprises an external shell and **in that** said means for injecting a gas inside the shaft comprise at the top of the calcination zone (B) lateral holes (7) in said shell and/or a central perforated cylinder (6) connected to the mixing chamber (25).

14. Parallel flow regenerative kiln according to anyone of claims 8 to 13, **characterized in that**, at the bottom of each shaft, a central collector element (11) is provided which communicates with an external extracting device (12) for removing from the kiln, at a level lower than the crossover channel (4), cooling air which has been heated in contact with the decarbonated calcined material.

15. Parallel flow regenerative kiln according to anyone of claims 8 to 14, **characterized in that** each shaft has a circular section and is provided with a peripheral channel (3) at the bottom of the calcination zone (B), said crossover channel (4) interconnecting the peripheral channels (3) of the shafts in order to allow a passage of gas from one shaft to another one, and **in that**, at a level lower than the peripheral channel (3), each shaft is provided with an annular collector (13) which communicates with an external extracting device(12) for removing from the kiln cooling air which has been heated in contact with the decarbonated calcined material.

16. Parallel flow regenerative kiln according to anyone of claims 8 to 14, **characterized in that** each shaft has a rectangular section, a side of one shaft facing a side of another shaft, the crossover channel interconnecting directly the shafts between said facing sides and **in that**, at a level below the crossover channel, at least some sides of each shaft are provided with at least one collector which communicates with an extracting device for removing from the kiln cooling air which has been heated in contact with the decarbonated calcined material.

17. Parallel flow regenerative kiln according to anyone of claims 8 to 16, **characterized in that** at least one heat exchanger (31) supplied with heated cooling air extracted from the kiln is arranged on said external recirculation circuit (21).
